# EUROPÄISCHE PATENTSCHRIFT

(11) **EP 1 478 547 B1**
(45) Veröffentlichungstag und Bekanntmachung des Hinweises auf die Patenterteilung: **06.09.2006**
(21) Anmeldenummer: 02792663.3
(22) Anmeldetag: 16.12.2002
(51) Int. Cl.: B60Q 1/48

(54) **VERFAHREN ZUM EINPARKEN EINES FAHRZEUGS**
METHOD FOR PARKING A VEHICLE
PROCEDE DE STATIONNEMENT D'UN VEHICULE

(30) Priorität: 19.02.2002 DE 10206764
(43) Veröffentlichungstag der Anmeldung: 24.11.2004
(73) Patentinhaber: ROBERT BOSCH GMBH, 70442 Stuttgart (DE)
(72) Erfinder: DANZ, Christian, 70469 Stuttgart (DE); UHLER, Werner, 76646 Bruchsal (DE)
(86) Internationale Anmeldenummer: PCT/DE2002/004585
(87) Internationale Veröffentlichungsnummer: WO 2003/070517

(56) Entgegenhaltungen:
- DE-A- 3 813 083
- DE-A- 19 744 185

## Beschreibung

### Stand der Technik

Die Erfindung geht aus von einem Verfahren zum Einparken eines Fahrzeugs nach der Gattung des unabhangigen Anspruchs 1. Es sind schon Messvorrichtungen, insbesondere Ultraschallmessvorrichtungen, bekannt, die ein Kraftfahrzeug vor einer Annäherung eines Hindernisses warnen. Abhängig vom Abstand wird ein Hinweissignal optisch und/oder akustisch an den Fahrer ausgegeben. Hierdurch können insbesondere Zusammenstöße mit Hindernissen vermieden werden, die entweder für den Fahrer nicht einsehbar sind oder zu denen er einen Abstand nur schlecht abschätzen kann. Ist jedoch eine Parklücke für das Einparken des Fahrzeugs zu kurz ist, so hilft eine derartige Messvorrichtung dem Fahrer nur begrenzt, da er gegebenenfalls versuchen wird, das Fahrzeug in die Parklücke einzuparken, was mißlingen muss. Aus der DE 196 16 447 A1 ist ein Verfahren zur Ermittlung der Länge einer Parklücke und ein für das Verfahren geeignetes Parkhilfegerät bekannt, mit dem bei langsamer Vorbeifahrt die Länge einer Parklücke zwischen einem vorderen und einem hinteren parkenden Fahrzeug bestimmbar ist. Mit dem beschriebenen Parkhilfegerät ist jedoch während des Einparkvorgangs selber eine Messung des Abstands zu Hindernissen nicht möglich, so dass während des Einparkvorgangs der Fahrer diese Abstände selbst überwachen muss.

Aus der DE 38 13 083 A1 ist eine automatische Einparkeinrichtung für Kraftfahrzeuge bekannt. An den vorderen und den rückwärtigen Ecken des Wagens sind Messeinrichtungen vorgesehen, die dazu dienen, eine direkte Kollision zu verhindern. Wenn ein Wagen vorwärts fährt, um eine Parkposition an der linken oder rechten Seite zu suchen, müssen nur die Messeinrichtungen auf der linken oder rechten Seite betätigt werden. Wird ein Einparkvorgang durchgeführt, so können teilweise die gleichen Messeinrichtungen betätigt werden, um ein Zusammenstoßen mit einem Hindernis zu verhindern.

Aus der DE 197 44 185 A1 ist eine Einrichtung zur Abstandsmessung mittels Ultraschall bekannt. Hierzu sind mehrere Ultraschallwandler an einem Kraftfahrzeug angeordnet wobei Ultraschallimpulse derart ausgesendet werden, dass sich die Ultraschallimpulse überlagem. Hiermit kann die Empfindlichkeit der Ultraschall-Abstandsmesseinrichtung im Vergleich zu einer Ultraschall-Abstandsmesseinrichtung mit einem Einzelsensorbetrieb erhöht werden. Der Betrieb mit der Amplitudenüberlagerung der von mehreren Sensoren ausgesendeten Ulträschallpulse erfolgt gemäß einer Ausführungsform nur bei einer hohen Geschwindigkeit, um die entsprechende hohe Reichweite bei der hohen Geschwindigkeit zu ermöglichen.

Vorteile der Erfindung

Das erfindungsgemäße Verfahren mit den Merkmalen des Hauptanspruchs hat demgegenüber den Vorteil, dass mit den Sensoren an der Seite des Fahrzeugs die Länge der Parklücke bestimmt wird und dieselben Sensoren bei dem Einparken auch zur Bestimmung von Abständen zwischen dem Fahrzeug und Hindernissen dienen, z.B. in Form von Begrenzungen der Parklücke. Das erfindungsgemäße Verfahren ermöglicht damit ein komfortables Einparken, da ein Fahrer sowohl auf eine geeignete Parklücke hingewiesen wird als auch bei dem Einparken in diese vor Zusammenstößen gewarnt wird. Durch die zum Teil zweifache Verwendung der Sensoren einerseits für die Parklückenlängenbestimmung und andererseits für die Abstandsbestimmung, kann die Anzahl der zu verwendenden Sensoren verringert werden bzw. die Auflösung und damit die Genauigkeit der Funktionsempfang kann erhöht werden.

Besonders vorteilhaft ist, insbesondere für seitlich an dem Fahrzeug angeordnete Sensoren zwei Messmodi vorzusehen, so dass für die Parklückenbestimmung und für die Abstandsbestimmung jeweils unterschiedliche Messverfahren verwendet werden können. Hierbei ist insbesondere vorteilhaft, in dem ersten Messmodus die Häufigkeit der Aussendung von Signalen für die Parklückenlängenbestimmung gegenüber der Abstandsbestimmung zu erhöhen, da hiermit auch bei einer hohen Fahrgeschwindigkeit gegenüber den parkenden Fahrzeugen eine genaue Parklückenbestimmung ermöglicht wird.

Durch die in den Unteransprüchen aufgeführten Maßnahmen sind vorteilhafte Weiterbildungen und Verbesserungen des im Hauptanspruch angegebenen Einparkverfahrens möglich.

Ferner ist vorteilhaft, dass in dem ersten Messmodus direkte Echos ausgewertet werden und dass in dem zweiten Messmodus neben den direkten Echos auch Kreuzechos ausgewertet werden, so dass eine räumliche Position eines Hindernisses bestimmt werden kann. Hierdurch können genauere Warnungen an den Fahrer ausgegeben wurden. Fehlmessungen, die ein Unterbleiben einer Warnung zur Folge haben, können vermieden werden.

Besonders vorteilhaft ist ferner, die Sensoren an einem vorderen und einem hinteren Fahrzeugende anzuordnen, so dass sowohl ein Rückwärts- als auch ein Vorwärts-Einparken unterstützt wird.

Ferner ist vorteilhaft, dass von den Sensoren akustische und/oder elektromagnetische Wellen ausgesendet und empfangen werden, so dass über eine Laufzeit und/oder eine Phasenverschiebung und/oder eine Frequenzverschiebung eine Abstandsbestimmung ermöglicht wird. Hierbei ist insbesondere die Verwendung von nicht hörbaren bzw. nicht sichtbaren akustischen und/oder elektrischen Wellen vorteilhaft, so dass andere Verkehrsteilnehmer durch den Messvorgang nicht gestört werden.

Die Auswertung wird durch eine zentrale Auswerteeinheit im Fahrzeug vereinfacht, von der auch Warnungen an den Fahrer ausgebbar sind.

### Zeichnung

Ausführungsbeispiele der Erfindung sind in der Zeichnung dargestellt und in der nachfolgenden Beschreibung näher erläutert. Es zeigen:
Figur 1 ein Ausführungsbeispiel eines Fahrzeugs mit Sensoren und einer Auswerteeinheit in einer Aufsicht,
Figur 2 ein Ausführungsbeispiel für einen erfindungsgemäßen Verfahrensablauf.

### Beschreibung des Ausführungsbeispiels

Das erfindungsgemäße Verfahren wird vorzugsweise in Kraftfahrzeugen verwendet, die in parallel zur Fahrbahn angeordnete Parklücken eingeparkt werden sollen. Jedoch ist es auch möglich, ungefähr senkrecht zur Fahrbahn verlaufende Parklücken zu vermessen. Hierbei können beliebige Entfernungsmessungsverfahren verwendet werden, so z.B. optische Entfernungsmessung mittels Laser, mittels Radar oder akustische Entfernungsmessung mittels Ultraschall. Alle genannten Messverfahren ermöglichen eine berührungslose Entfernungsmessung. Im Folgenden ist das erfindungsgemäße Verfahren anhand einer Verwendung von an einem Fahrzeug angeordneten Ultraschallsensoren erläutert.

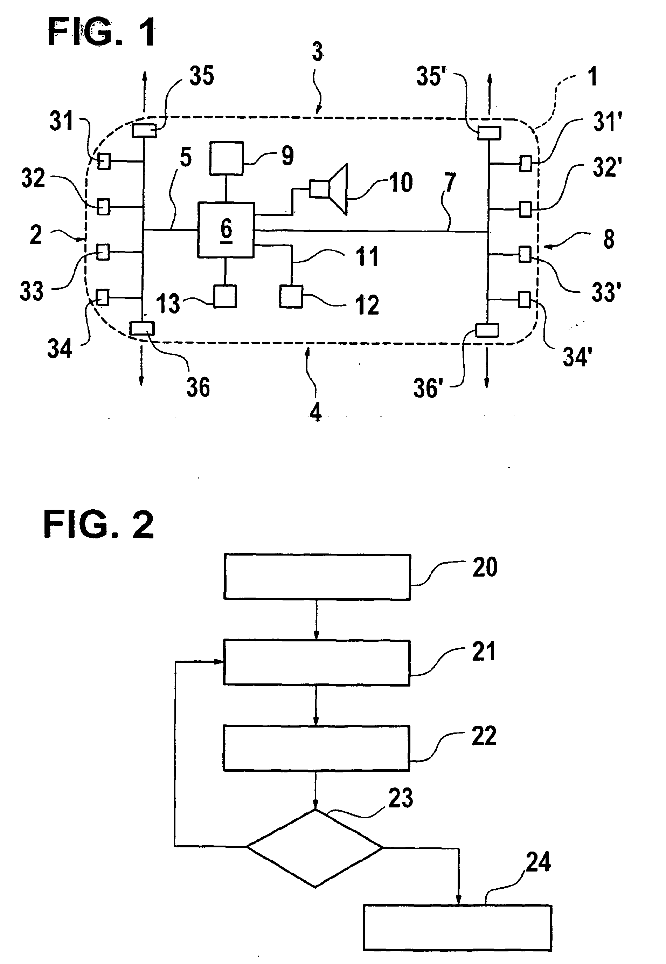

In der Figur 1 ist eine Prinzipskizze einer Sensoranordnung in einem Kraftfahrzeug 1 in Aufsicht dargestellt. Die Umrisse des Kraftfahrzeugs 1 sind gestrichelt gekennzeichnet. An einer Frontseite 2 des Fahrzeugs sind vier Abstandssensoren 31, 32, 33, 34 angeordnet. Ferner ist ein weiterer Abstandssensor 35 an der rechten Fahrzeugseite 3 im Frontbereich des Kraftfahrzeugs 1 angeordnet. Dem Abstandssensor 35 an der rechten Fahrzeugseite 3 ist gegenüberliegend an der linken Fahrzeugseite 4 ein weiterer Abstandssensor 36 angeordnet. Die Abstandssensoren sind über einen Datenbus 5 mit einer Auswerteeinheit 6 verbunden. Über einen weiteren Datenbus 7 sind auch Abstandssensoren an der Rückseite 8 des Kraftfahrzeugs 1 mit der Auswerteeinheit 6 verbunden. In einer bevorzugten Ausführungsform sind die Sensoren an der Fahrzeugrückseite 8 spiegelsymetrisch zu den Sensoren an der Frontseite 2 des Fahrzeugs angeordnet. Entsprechend befindet sich an der rechten Fahrzeugseite ein Abstandssensor 35', an der Frontseite befinden sich Abstandssensoren 31', 32', 33', 34' und an der linken Fahrzeugseite ein Abstandssensor 36'. Die Abstandssensoren sind in dem hier dargestellten Ausführungsbeispiel jeweils als baugleiche Ultraschallsensoren ausgeführt. Die Ultraschallsensoren sind in einem bevorzugten Ausführungsbeispiel sowohl als Ultraschallsendeeinheiten zum Aussenden von Ultraschallwellen in einem Sendebetrieb und als Ultraschallempfangseinheiten zum Empfangen von reflektierten Ultraschallsignalen in einem Empfangsbetrieb ausgeführt. In einem weiteren, bevorzugten Ausführungsbeispiel kann von den Abstandssensoren eine zeitliche Differenz zwischen einem ausgesendeten und einem empfangenen Signal gebildet werden, so dass von den Abstandssensoren über die Datenbusse 5, 7 unmittelbar aus der Signallaufzeit die Entfernung zwischen dem Sensor und einem Hindernis bestimmt und an die Auswerteeinheit 6 übertragen werden kann. Die Abstandssensoren sind dabei bevorzugt in einen Stoßfänger des Kraftfahrzeugs eingelassen. Eine Stromversorgung der Sensoren erfolgt entweder über die Leitungen der Datenbusse 5, 7 oder über zusätzlich anzuordnende, in der Figur 1 nicht dargestellte Stromversorgungsleitungen. In einer weiteren Ausführungsform ist es auch möglich, die Sensoren jeweils einzeln mit der Auswerteeinheit 6 zu verbinden. Die an den Fahrzeugseiten 3, 4 angeordneten Sensoren dienen insbesondere bei dem Einparkvorgang selber dazu, dass der Fahrer nicht mit einer Fahrzeugecke an ein parkendes Fahrzeug gerät. In einem weiteren Ausführungsbeispiel ist es auch möglich, an den Fahrzeugseiten 3, 4 lediglich einen Sensor, vorzugsweise in der Nähe der Frontseite 2 des Kraftfahrzeugs 1 anzuordnen. Mittels zwei Abstandssensoren ist eine Plausibilitätsprüfung und insbesondere auch eine Messung bei einem Zurücksetzen des Fahrzeugs möglich.

Die Auswerteeinheit 6 ist mit einer Anzeigeeinheit 9 verbunden, mit der einem Fahrer ein gemessener Abstand und/oder eine geeignete Parklücke angezeigt werden kann. Über einen Lautsprecher 10 können entsprechend unterstützend akustische Warnsignale ausgegeben werden. Die Auswerteeinheit 6, die zumindest eine Recheneinheit aufweist, ist ferner über ein weiteres Fahrzeugbussystem 11, z.B. dem CAN-Bus, mit einem Radsensor 12 verbunden, mit dem eine zurückgelegte Wegstrecke des Fahrzeugs über die Raddrehzahl ermittelt werden kann. Ferner ist die Auswerteeinheit 6 mit einem Richtungsanzeigensensor 13 verbunden, der eine Betätigung einer Fahrzeugrichtungsanzeige erfasst und an die Auswerteeinheit 6 meldet. Eine derartige Meldung kann auch über das Fahrzeugbussystem 11 übertragen werden. Die Auswerteeinheit 6 kann noch mit weiteren Entfernungsmessungsvorrichtungen, z.B. mit Radarmessvorrichtungen und/oder mit Video-optischen Messvorrichtungen verbunden sein, die insbesondere einer Abstandsmessung zu anderen Fahrzeugen während des Fahrbetriebs dienen.

Ein erfindungsgemäßes Messverfahren wird durch zwei unterschiedliche Betriebszustände des in dem Kraftfahrzeug 1 angeordneten Abstandsmesssystems gemäß der Figur 1 ermöglicht. Ein erster Messmodus dient der Parklückenfindung. In diesem Messmodus werden in Abhängigkeit von einer durch den Benutzer gewählten Parkseite entweder von den an der rechten Fahrzeugseite 3 oder von den an der linken Fahrzeugseite 4 angeordneten Abstandssensoren 35, 35' bzw. 36, 36' Signale ausgesendet. Diese Signale werden entweder von parkenden Fahrzeugen reflektiert, falls die Parklücke besetzt ist, bei Freiflächen erst von einem Hindernis, wie z.B. einer seitlichen Parkraumbegrenzung, einer Häuserwand, einer Bordsteinkante oder verlieren sich völlig und werden nicht reflektiert. In Abhängigkeit von dem empfangenen Signal kann die Auswerteeinheit 6 also feststellen, ob eine neben dem Fahrzeug befindliche Parklücke besetzt ist oder nicht. Wenn sich das Fahrzeug an der Parklücke vorbeibewegt kann durch wiederholte Messung ortsabhängig festgestellt werden, ob die Parklücke frei ist. Ein längerer, zusammenhängender Teil definiert eine freie Parklücke. Die Auswerteeinheit 6 vergleicht die Länge der Parklücke mit einem in der Auswerteeinheit gespeicherten Wert, der von den Abmaßen des Fahrzeugs abhängt und dem Fahrer genügend Platz für ein komfortables Einparken des Fahrzeugs läßt. Gegebenenfalls kann dieser Wert durch den Fahrer verändert werden, z.B. wenn sich der Fahrer auch das Einparken in recht knappe Parklücken zutraut. In einer bevorzugten Ausführungsform erfolgt das Aussenden von Signalen alle 20 bis 40 ms, so dass eine erfolgreiche Messung auch bei einer höheren Geschwindigkeit des eine Parklücke suchenden Fahrzeugs gewährleistet wird.

Wird eine für das Fahrzeug geeignete Parklücke detektiert, so wird dies dem Fahrer über eine geeignete Anzeige in der Anzeigeeinheit 9 dargestellt und ein akustischer Hinweis wird über den Lautsprecher 10 ausgegeben. Will der Fahrer in die Parklücke einparken, so wird bevorzugt automatisch nach Vorliegen einer ausreichend großen Parklücke in den zweiten Messmodus umgeschaltet. In diesem Modus werden nicht nur die an den Fahrzeugseiten 3, 4 angeordneten Sensoren, sondern auch die an der Frontseite 2 und der Rückseite 8 angeordneten Sensoren betrieben. Es erfolgt eine Signalausstrahlung mit einer niedrigeren Pulsrate, z.B. alle 120 bis 240 ms, da bei dem Einparkvorgang die Fahrgeschwindigkeit des Fahrzeugs im Vergleich zu einer Vorbeifahrt an der Parklücke recht gering ist. Während in dem ersten Messmodus die seitlich angeordneten Abstandssensoren 35, 35' bzw. 36, 36' nur das reflektierte, von ihnen ausgesendete Signal auch wieder empfangen, ist in dem zweiten Messmodus auch eine Kreuzechomessung möglich, bei der der Abstandssensor 33 ein von dem Abstandssensor 31 ausgesendetes Signal empfängt. Mit dieser sogenannten Kreuzechomessung ist eine genauere Lokalisierung von Hindernissen möglich. In der Auswerteeinheit werden direkt empfangene Echos und Kreuzechos ausgewertet und dem Fahrer symbolhaft und/oder zahlenmäßig die aus der Laufzeit des reflektierten Ultraschallsignals ermittelte Entfernung zu einem Hindernis dargestellt. Bevorzugt wird dem Fahrer zudem der Ort des Hindernisses angezeigt wird oder es wird eine Richtung angezeigt, in der das Hindernis liegt.

Für die an den Fahrzeugseiten 3, 4 angeordneten Sensoren und für die an den Frontseiten 2, 8 angeordneten Sensoren können unterschiedliche Sensortechnologien, z.B. einerseits Ultraschall- und andererseits Radarsensoren, verwendet werden. Auch bei der Verwendung der gleichen Sensortechnologie können Sensoren mit unterschiedlichen Öffnungswinkeln eingesetzt werden. In einer bevorzugten Ausführungsform werden jedoch für alle angeordneten Sensoren baugleiche Sensoreinheiten verwendet, so dass für die gesamte Abstandssensorausstattung des Kraftfahrzeugs 1 gleiche Bauteile verwendet werden können, wodurch insbesondere die Montage erleichtert wird.

In der Figur 2 ist ein Ausführungsbeispiel für die Durchführung des erfindungsgemäßen Verfahrens dargestellt. Das Einparkverfahren wird durch einen Initialisierungsschritt 20 eingeleitet. In einer ersten Ausführungsform wird z.B. durch ein mit der Auswerteeinheit 6 verbundenes Bedienelement, das in der Figur 1 nicht gezeigt ist, durch den Benutzer der Wunsch eingegeben, an der rechten oder an der linken Fahrzeugseite einzuparken. In einer bevorzugten Ausführungsform ist eine bevorzugte Seite, z.B. für ein Fahrzeug im Rechtsverkehr die rechte Fahrzeugseite, als eine bevorzugte Einparkseite vorgegeben. Bei der Aktivierung der Einparkvorrichtung wird diese Seite bevorzugt ausgewählt und muss korrigiert werden, falls der Benutzer auf der linken Fahrzeugseite einparken will. In einer weiteren Ausführungsform kann das erfindungsgemäße Verfahren auch durch das Setzen des Blinkers aktiviert werden. Eine Betätigung des Blinkers wird über den Richtungsanzeigensensor 13 erfasst und an die Auswerteeinheit 6 weitergeleitet. Durch eine Plausibilitätsprüfung ist in einer nachfolgenden Messung zu prüfen, ob der Fahrer tatsächlich einparken oder abbiegen will. Wird in der Folge ein Abbiegevorgang durchgeführt, so wird das Verfahren zum Einparken automatisch deaktiviert. An den Initialisierungsschritt 20 schließt sich ein Messschritt 21 an, in dem ja nach Seitenauswahl die an der rechten Fahrzeugseite 3 angeordneten Abstandssensoren 35, 35' oder die an der linken Fahrzeugseite 4 angeordneten Abstandssensoren 36, 36' vorzugsweise mit einer hohen Pulsrate betrieben werden.

An den Messschritt 21 schließt sich ein Auswerteschritt 22 an, in dem die Länge einer erfassten Parklücke bestimmt wird, sobald die seitlich angeordneten Abstandssensoren eine entsprechende Parklücke detektieren, das heißt bei dem sie einen seitlichen Abstand des Fahrzeugs zu einem Straßenrand oder eine Straßenbegrenzung erfassen, die breit genug für die Aufnahme des Kraftfahrzeugs ist. Als Grundabstand zwischen dem Kraftfahrzeug 1 und dem Anfang der Parklücke wird dabei der zuvor ermittelte Abstand zu einem neben dem Fahrzeug befindlichen Hindernis ermittelt, vorzugsweise der Abstand zu einem vor bzw. hinter der Parklücke abgestellten Fahrzeug. Über die von dem Radsensor 12 übermittelten Abstandswerte bzw. Raddrehzahlwerte kann die Auswerteeinheit 6 eine zurückgelegte Wegstrecke bestimmen. Insbesondere ist es damit möglich, zu ermitteln, wie lang eine neben dem Fahrzeug befindliche Parklücke ist. Wird das Ende der Parklücke erreicht oder wird eine vorgeschriebene Länge der Parklücke überschritten, so wird zu einem Entscheidungsschritt 23 weiterverzweigt. In dem Entscheidungsschritt 23 wird von der Auswerteeinheit 6 geprüft, ob die Parklücke für das Einparken des Kraftfahrzeugs 1 groß genug ist. Ist dies nicht der Fall, so wird das erfindungsgemäße Verfahren mit dem Messschritt 21 weiter betrieben. Dem Fahrer wird angezeigt, dass bisher keine geeignete Parklücke gefunden wurde. Gegebenenfalls kann auch die gemessene Länge der Parklücke, insbesondere bei Parklücken mit einer Länge über 1,50 m, angezeigt werden. Wird dagegen festgestellt, dass die Parklücke groß genug ist, so wird an den Fahrer ein entsprechender Hinweis optisch und/oder akustisch ausgegeben und die Abstandssensoren werden in den zweiten Messmodus umgeschaltet, bei dem einerseits alle Sensoren betrieben werden und andererseits eine Signalabstrahlung mit einer niedrigeren Signalfolge gegenüber dem ersten Messmodus erfolgt. Insbesondere nehmen an dieser Messung auch die Abstandssensorensoren 35, 35' sowie 36 und 36' teil. Das Einparkverfahren wird mit einem Endschritt 24 beendet, wenn der Einparkvorgang abgeschlossen oder abgebrochen wird.

## Patentansprüche

1. Verfahren zum Einparken eines Fahrzeugs, wobei Abstände des Fahrzeugs zu Hindernissen über eine Vielzahl von Sensoren ermittelt werden und wobei mit zumindest einem Teil der Sensoren die Länge und/oder die Breite einer Parklücke bestimmt wird und bei einem anschließenden Einparken in die Parklücke die Abstände zu Begrenzungen der Parklücke von diesen Sensoren gemessen werden und bei einem Unterschreiten eines vorgegebenen Abstands zu einem Hindernis ein Warnsignal an den Fahrer ausgegeben wird, **dadurch gekennzeichnet, dass** diese Sensoren bei der Bestimmung der Länge und/oder Breite der Parklücke in einem ersten Messmodus und bei der Bestimmung der Abstände zu den Begrenzungen der Parklücke in einem zweiten Messmodus betrieben werden.

2. Verfahren nach Anspruch 1, **dadurch gekennzeichnet, dass** die Frequenz einer Signalaussendung in dem ersten Messmodus größer als in dem zweiten Messmodus ist.

3. Verfahren nach einem der vorherigen Ansprüche, **dadurch gekennzeichnet, dass** in dein ersten Messmodus direkte Echos ausgewertet werden und dass in dem zweiten Messmodus direkte Echos und Kreuzechos ausgewertet werden.

4. Verfahren nach einem der vorhergehenden Ansprüche, **dadurch gekennzeichnet, dass** Sensoren an einem vorderen und einem hinteren Ende des Fahrzeugs betrieben werden und dass zumindest ein Teil der Sensoren an dem vorderen und hinteren Ende des Fahrzeugs seitlich an dem Fahrzeug betrieben werden.

5. Verfahren nach einem der vorhergehenden Ansprüche, **dadurch gekennzeichnet, dass** von den Sensoren akustische und/oder elektromagnetische Wellen ausgesendet werden und reflektierte akustische und/oder elektromagnetische Wellen wieder empfangen werden.

6. Verfahren nach einem der vorhergeheriden Ansprüche, **dadurch gekennzeichnet, dass** die von den Sensoren ermittelten Daten von einer Steuereinheit im Fahrzeug ausgewertet werden und Warnungen oder Hinweise ausgegeben werden.

7. Vorrichtung zum Einparken eines Fahrzeugs (1) mit einer Sensoranordnung zur Messung der Abstände des Fahrzeugs zu Begrenzungen der Parklücke während des Einparkens in einem zugehörigen Messmodus und mit einer Auswerteeinheit (6) zur Ausgabe von akustischen Warnungen über einen Lautsprecher (10) oder zur Anzeige von Abständen in einer Anzeigeeinheit (9), **dadurch gekennzeichnet, dass** zumindest ein Teil der Sensoren (35, 35', 36, 36') der Sensoranordnung zur Vermessung einer Länge und/oder Breite eine Parklücke in einem weiteren Messmodus ausgelegt sind.

## Claims

1. Method for parking a vehicle, distances between the vehicle and obstacles being measured by means of a plurality of sensors and the length and/or the width of a parking space being determined using at least some of the sensors, and when the vehicle is subsequently parked in the parking space the distances from boundaries of the parking space are measured by these sensors and when the distance from an obstacle drops below a predefined distance a warning signal is output to the driver, **characterized in that** these sensors are operated in a first measuring mode for the determination of the length and/or width of the parking space, and in a second measuring mode for the determination of the distances from the boundaries of the parking space.

2. Method according to Claim 1, **characterized in that** the frequency of the emission of signals in the first measuring mode is higher than in the second measuring mode.

3. Method according to one of the preceding claims, **characterized in that** direct echoes are evaluated in the first measuring mode, and **in that** direct echoes and cross echoes are evaluated in the second measuring mode.

4. Method according to one of the preceding claims, **characterized in that** sensors are operated at a front end and a rear end of the vehicle, and **in that** at least some of the sensors at the front and rear ends of the vehicle are operated on the sides of the sides of the vehicle.

5. Method according to one of the preceding claims, **characterized in that** acoustic and/or electromagnetic waves are emitted by the sensors and reflected acoustic and/or electromagnetic waves are received again.

6. Method according to one of the preceding claims, **characterized in that** the data which is acquired by the sensors is evaluated by a control unit in the vehicle and warnings or messages are output.

7. Device for parking a vehicle (1) having a sensor arrangement for measuring the distances between the vehicle and boundaries of the parking space while the vehicle is parking in an associated measuring mode, and having an evaluation unit (6) for outputting acoustic warnings via a loudspeaker (10) or for displaying distances in a display unit (9), **characterized in that** at least some of the sensors (35, 35', 36, 36') of the sensor arrangement are designed to measure a length and/or width of a parking space in a further measuring mode.

## Revendications

1. Procédé de stationnement d'un véhicule, selon lequel on détermine des distances du véhicule par rapport à des obstacles au moyen d'une pluralité de capteurs, on détermine la longueur et/ou la largeur d'un emplacement de stationnement avec au moins une partie des capteurs et ensuite, lors d'une manoeuvre de stationnement dans l'emplacement de stationnement, on mesure les distances par rapport aux délimitations de l'emplacement de stationnement à l'aide de ces capteurs et, en cas de franchissement d'une distance prédéterminée par rapport à un obstacle, un signal est transmis au conducteur,
**caractérisé en ce que**
ces capteurs fonctionnent selon un premier mode de mesure lors de la détermination de la longueur et/ou de la largeur de l'emplacement de stationnement, et dans un deuxième mode de mesure lors de la détermination des distances par rapport aux limites de l'emplacement de stationnement.

2. Procédé selon la revendication 1,
**caractérisé en ce que**
la fréquence d'une émission de signal dans le premier mode de mesure est plus grande que dans le deuxième mode de mesure.

3. Procédé selon l'une quelconque des revendications précédentes,
**caractérisé en ce que**
dans le premier mode de mesure on évalue des échos directs et dans le deuxième mode de mesure on évalue des échos directs et des échos croisés.

4. Procédé selon l'une quelconque des revendications précédentes,
**caractérisé en ce qu'**
on utilise des capteurs à une extrémité avant et à une extrémité arrière du véhicule, et on utilise au moins une partie des capteurs sur l'extrémité avant et l'extrémité arrière du véhicule latéralement sur le véhicule.

5. Procédé selon l'une quelconque des revendications précédentes,
**caractérisé en ce qu'**
on émet des ondes acoustiques et/ou électromagnétiques, et des ondes acoustiques et/ou électromagnétiques réfléchies sont reçues par les capteurs.

6. Procédé selon l'une quelconque des revendications précédentes,
**caractérisé en ce qu'**
une unité de commande dans le véhicule exploite les données déterminées par les capteurs et émet des avertissements ou des signaux

7. Dispositif de stationnement d'un véhicule (1) comportant un ensemble de capteurs pour la mesure des distances du véhicule par rapport à des limitations de l'emplacement de stationnement pendant la manoeuvre de stationnement dans un mode de mesure adéquat, et avec une unité d'exploitation (6) pour l'émission d'avertissements acoustiques par un haut-parleur (10) ou pour l'affichage de distances dans une unité d'affichage (9),
**caractérisé en ce qu'**
au moins une partie des capteurs (35, 35', 36, 36') de l'ensemble de capteurs sont conçus pour mesurer dans un autre mode de mesure, la longueur et/ou la largeur d'un emplacement de stationnement.
